# EUROPEAN PATENT APPLICATION

(11) **EP 1 669 012 A1**
(43) Date of publication of application: **14.06.2006**
(21) Application number: 04727811.4
(22) Date of filing: 16.04.2004
(51) Int. Cl.: A47J 37/04

(54) **A DUAL-PURPOSED OVEN FOR ROASTING AND HEATING**

(30) Priority: 30.09.2003 CN 03237873
(71) Applicant: Guangzhou Light Holdings Limited, Guangzhou, Guangdong 510120 (CN)
(72) Inventor: ZHANG, Zuanzhen, Guangzhou, Guangdong 510440 (CN)
(74) Representative: KEIL & SCHAAFHAUSEN Patentanwälte
(86) International application number: PCT/CN2004/000368
(87) International publication number: WO 2005/030021

(57) **Abstract**

This invention relates to a dual-purpose stove for baking and heating, **characterized in that** it comprises a case body, a driving device, rotatable and non-rotatable baking tubes. Said driving device comprises a motor and a transmission mechanism; said baking tube comprises a tube sleeve and a heating element inside the tube sleeve; the present invention provides a dual-purpose stove for baking and heating at one time so as to overcome the drawback of single purpose for the appliances in the prior art. That is, it can bake sausage and heat bread at the same time.

## Description

### TECHNICAL FIELD

This invention relates to home baking equipment, more particularly, a dual-purpose stove for baking and heating.

### BACKGROUND OF THE INVENTION

There are many kinds of electric appliances for heating and baking food in the prior art, but they are used either for baking alone or heating alone. For example, a sausage machine is used for baking sausage only while a toaster is used for baking or heating bread only. Such appliances, which are of single purpose, can either bake or heat one sort of food in one time.

### SUMMARY OF THE INVENTION

In order to solve the above-mentioned problem in the prior art, the present invention provides a dual-purpose stove for baking and heating at one time so as to overcome the drawback of single purpose for the appliances in the prior art.

The dual-purpose stove for baking and heating according to the present invention comprises a case body, a driving device, rotatable and non-rotatable baking tubes.

The driving device and the baking tubes are provided on the case body. Preferably, there are two kinds of baking tubes, i.e. baking and heating tubes. The baking tube which comprises a tube sleeve and a heating element inside the tube sleeve is used for baking or heating different food. The heating element can comprise of a heating tube or a heating wire.

The baking tubes rotate when they are baking food; the baking tubes do not rotate when they are heating food.

The driving device drives the baking tubes to rotate by means of a motor and a transmission mechanism. The food which is placed on the baking tubes rotates as the baking tube rotates, thereby achieving even heating of the food which requires continuous turning or rotating so as to effect the purpose of baking.

In order to control the baking effect for different food, two or more controllers can be adopted to control the temperature and baking time of different baking tubes.

In order to heat different food, the baking tubes can be of different shapes.

The dual-purpose stove for baking and heating according to the present invention can not only bake and heat food respectively but also bake and heat food at the same time, that is, it can bake sausage and heat bread at the same time.

### BRIEF DISCRIPITON OF THE DRAWINGS

FIG. 1 is a schematically perspective diagram of a dual-purpose stove for baking and heating according to the present invention;
FIG. 2 is a schematically sidewise section view of FIG. 1;
FIG. 3 is a schematic section view of FIG. 2 taken along a line A-A;
FIG. 4 is a schematically reassembling diagram of a case and a supporting frame, in which the components are indicated as follows:

| | |
|---|---|
| 1. case body | 13. gear A |
| 2. baking tube A | 14. gear B |
| 3. baking Tube B | 15. mica sheet |
| 4. control knob A | 16. left supporting plate |
| 5. control knob B | 17. left baffle plate |
| 6. base plate | 18. right supporting plate |
| 7. supporting frame | 19. right baffle plate |
| 8. electric motor | 20. flat plate |
| 9. chain | 21. case |
| 10. heating tube | 22. driving device |
| 11. heating wire | 23. transmission mechanism |
| 12. tube sleeve | |

### DETAILED DESCRIPTION OF THE INVENTION

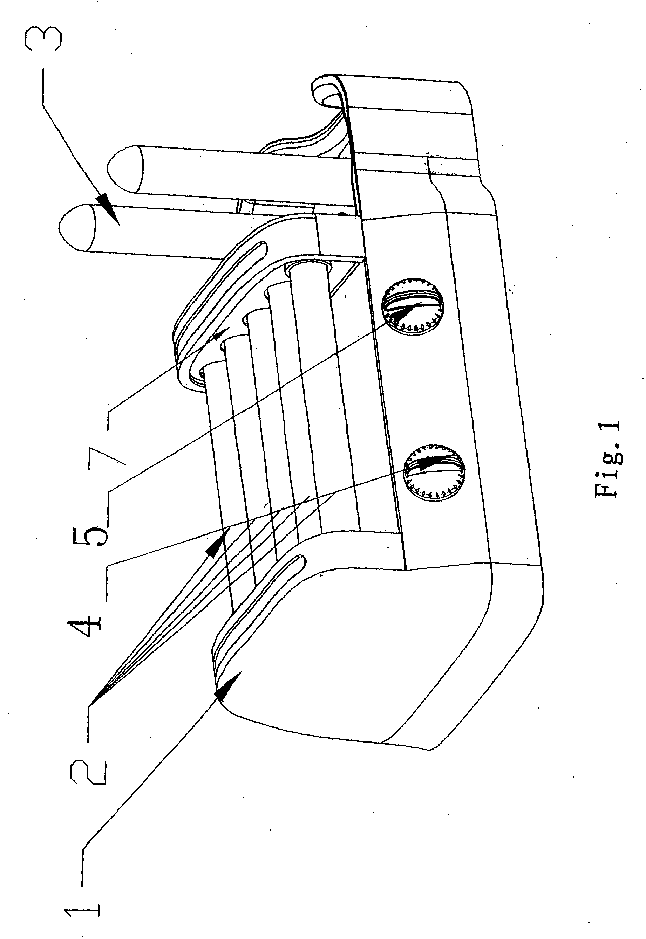

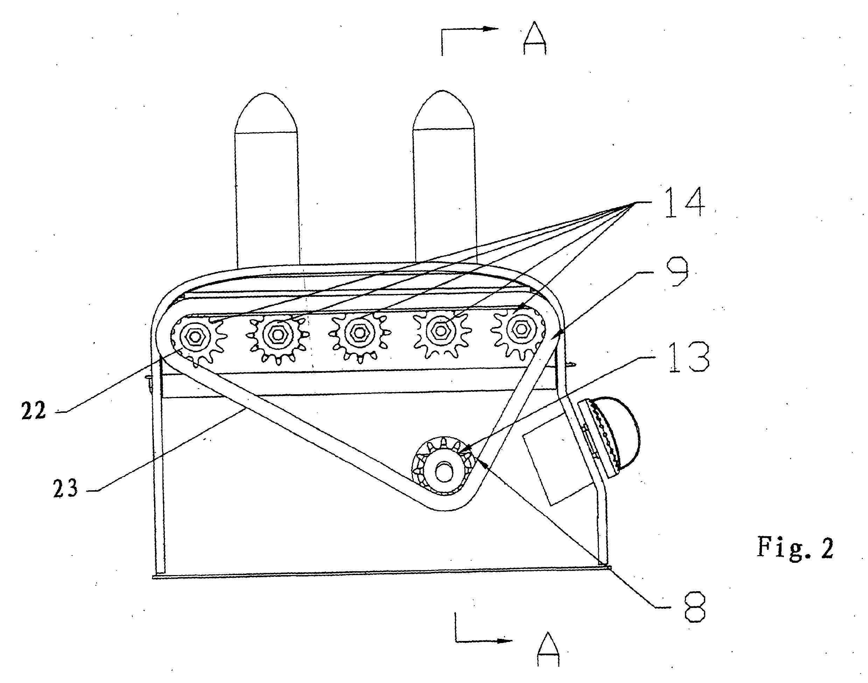

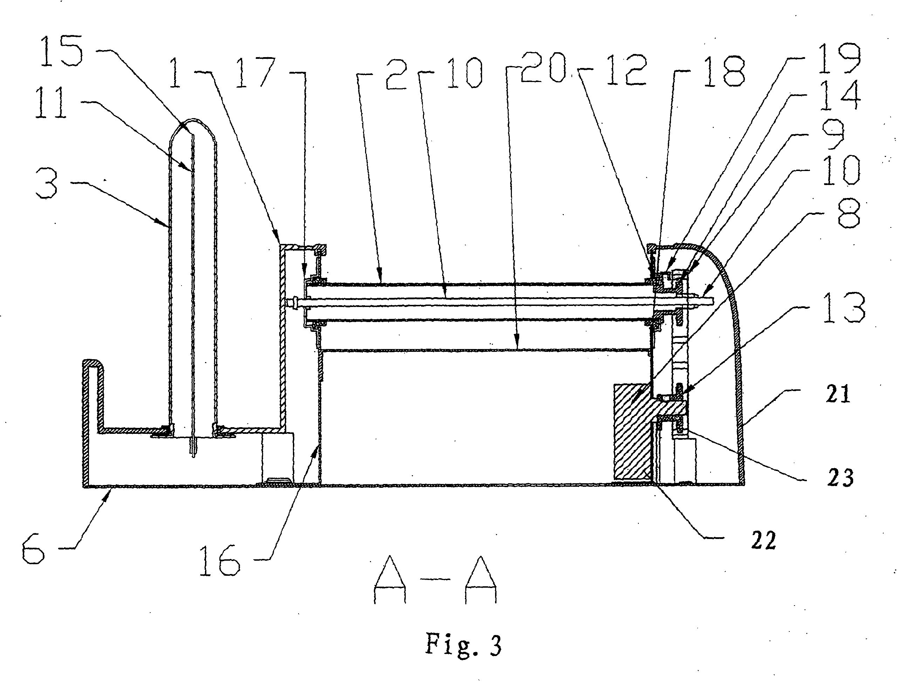

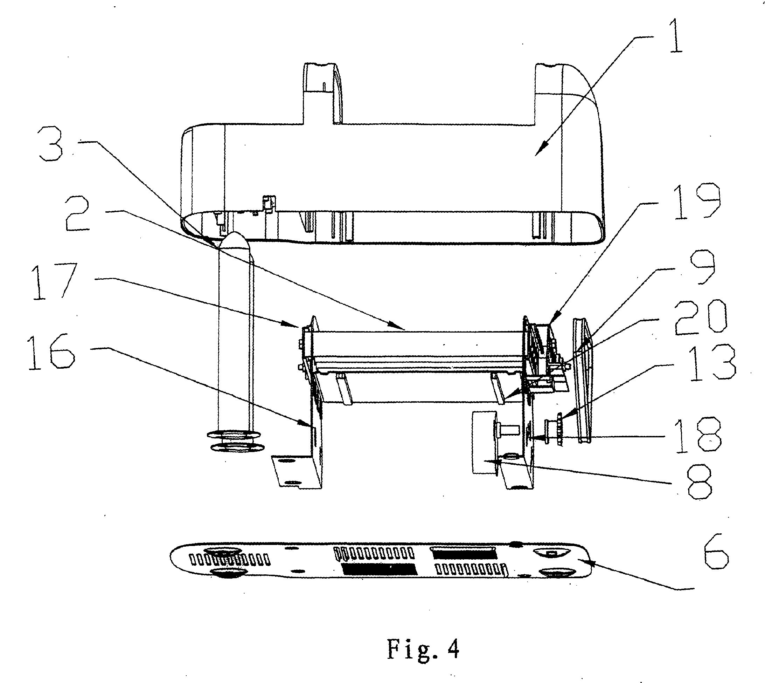

Referring to Fig. 1-4, through an embodiment of the present invention, each component as well as the structural features and assembly relation of the dual-purpose stove for baking and heating are introduced in detail.
1. An automobile-shell-like case body 1 comprises a plastic case 21, a supporting frame 7 and a base plate 6. The plastic case 21 which is shaped like an automobile shell is provided with a U-shape groove on each of the left and right sides thereof for mounting the supporting frame 7. There are two round holes on the right of the bottom plane of the case 21, which are used for mounting heating tubes B3. A plurality of screws are provided on the bottom of the case 21 to connect and mount the base plate 6. Two groups of roundlet holes are provided in the front of the case 21 to connect and mount control knobs A, B4, 5. The supporting frame 7, consisting of a left baffle plate 17, a right baffle plate 19, a left supporting plate 16, a right supporting plate 18 and a flat plate 20, is a rigid welding part with a substantial H-shape, in which the left and right supporting plates 16 and 18, fixed to the rectangle flat plate 20 by spot-welding, are U-shape steel plates. The left baffle plate 17, which is a bent steel plate of U-shape, is fixed to the left supporting plate 16 through butt welding and the right baffle plate 19, which is a bent steel plate of "U" shape, is fixed to the right supporting plate 18 through butt welding. There are provided respective five round holes on the upper part of the left and right supporting plates 16 and 18 for mounting the heating tubes A2, which can rotate freely in the five round holes. Two rows of roundlet holes are provided on the bottom of right supporting plate 18 for mounting an electric motor 8 which is fixed to the right supporting plate 18 with screws. The rib groove of U-shape ,on each of the left and right sides of case 21 is used for mounting the supporting frame 7 whose left and right supporting plates 16 and 18 are engaged correspondingly in the U-shape grooves of the case 21. Two round holes on the right side of case 21 are used for mounting heating tube B3 which is fixed to the case 21 with screws. Four screws on the case 21 are used to mount the base plate 6 which is locked to the case 21 tightly by screws. There are five holes for mounting tube sleeves 12 on each of the left and right baffle plates 17 and 19 and at the same time, heating tubes 10 are fixed to the left and right baffle plates 17 and 19. The supporting frame 7 is engaged in the U-shape groove of the case 21 via left and right supporting plates 16 and 18 so as to be connected with the case 21. Meanwhile, the substantially rectangular base plate 6 is fixed to the case 21 through screws so as to support a driving device 22 and the baking tubes A2.
2. The baking tube A2 is a hollow aluminum tube or a stainless steel tube, which is contained in a tube sleeve 12 with one end butt-welded to a gear B 14 so that it can rotate freely in the tube sleeve 12. The baking tube A2 has a heating tube 10 disposed therein which is connected to the left and right baffle plates 17 and 19 of the supporting frame through the tube sleeve 12 with both ends fixed to the left and right baffle plates 17 and 19 of the supporting frame by screws. The baking tube B3 is a hollow aluminum tube or a stainless steel tube as well, which is connected to the case 21 perpendicularly through screws. The baking tube B3 has a mica sheet 15 disposed therein which is engaged in a fixture of the case 21 so as to be fixed there and around which a heating wire is wounded.
3. The driving device 22 comprises the electric motor 8 and a transmission mechanism 23 which comprises a gear A13, a gear B14 and a chain 9. The electric motor 8 is connected to the right supporting plate 18 of the supporting frame 7 though screws. The gear A13 is fixed to a transmission shaft of the electric motor through screws. The gears B 14 are fixed to the baking tubes A2 through butt-welding. The chain 9 fits over the gear A 13 and the gears B 14. The rotation of the electric motor drives the rotation of gear A so as to drive the rotation of the gears B and the baking tubes A2.
4. A control knob A4 and a knob B5 are mounted on the case 21 respectively to control the work condition of the driving device 22, the baking tubes A2 and B3. The control knob A4 is used to control whether the baking tubes A2 and the driving device run or not. The control knob B5 is used to control whether the baking tubes B3 run or not.

Conventional means can be used for the electric wiring, installation and the mechanical manufacturing and assembling of the present invention.

## Claims

1. A dual-purpose stove for baking and heating, **characterized in that** it comprises a case body, a driving device, rotatable and non-rotatable baking tubes.

2. The dual-purpose stove for baking and heating according to claim 1, **characterized in that** said driving device comprises a motor and a transmission mechanism.

3. The dual-purpose stove for baking and heating according to claims 1 or 2, **characterized in that** said baking tube comprises a tube sleeve and a heating element inside the tube sleeve.

4. The dual-purpose stove for baking and heating according to claim 3, **characterized in that** said heating element is a heating tube or a heating wire.

5. The dual-purpose stove for baking and heating according to claims 1 or 2, **characterized in that** it is provided with controllers for controlling the rotatable baking tubes and the non-rotatable baking tubes, respectively, so as to control the rotation of the baking tubes, the temperature of the baking tubes and the period of time for baking respectively.

6. The dual-purpose stove for baking and heating according to claims 1 or 2, **characterized in that** the rotatable baking tubes are disposed rotatably horizontally in the case body.

7. The dual-purpose stove for baking and heating according to claims 1 or 2, **characterized in that** the non-rotatable baking tubes are disposed vertically in the case body and are located on one side of the rotatable baking tubes.
